# EUROPÄISCHE PATENTSCHRIFT

(11) **EP 0 444 423 B1**
(45) Veröffentlichungstag und Bekanntmachung des Hinweises auf die Patenterteilung: **24.05.1995**
(21) Anmeldenummer: 91101104.7
(22) Anmeldetag: 29.01.1991
(51) Int. Cl.: F28F 9/02, F28F 21/06

(54) **Kunststoffwasserkasten für Wärmetauscher**
Plastic header box for heat exchanger
Boîte de distribution en plastique pour échangeur de chaleur

(30) Priorität: 02.03.1990 DE 9002438 U
(43) Veröffentlichungstag der Anmeldung: 04.09.1991
(73) Patentinhaber: Behr GmbH & Co., D-70469 Stuttgart (DE)
(72) Erfinder: Damsohn, Herbert, Dr.-Ing., W-7307 Aichwald 2 (DE); Wolf, Walter, Dipl.-Ing., W-7155 Oppenweiler (DE)
(74) Vertreter: Wilhelm, Hans-Herbert, Dr.-Ing.

(56) Entgegenhaltungen:
- FR-A- 2 171 446
- FR-A- 2 249 299
- FR-A- 2 302 495
- FR-A- 2 502 318
- GB-A- 862 094

## Beschreibung

Die Erfindung betrifft einen Kunststoffwasserkasten für Wärmetauscher von Verbrennungskraftmaschinen, insbesondere für Kühler von Nutzfahrzeugmotoren nach dem Oberbegriff des Patentanspruches 1.

Aus der FR-A-22 49 299 ist ein Wasserkasten dieser Art mit einem Deckel bekannt, in den ein Anschlußstutzen für einen Schlauchanschluß mit an einem Ende vorgesehenen Rastmitteln in eine korrespondierende Öffnung eingeschoben ist, in die er durch die gewählte Ausgestaltung einschnappt. Man hat dort vorgesehen, den Befestigungsteil des Anschlußstutzens mit versteifenden, stegartigen Innenwänden zu versehen, um den Schnappsitz des einsteckbaren Stutzens in dem Wasserkastendeckel zu sichern. Eine Möglichkeit allerdings eine Verstärkung an der Stelle vorzusehen, an der die späteren Schlauchanschlüsse abgedichtet angebracht werden müssen, ist nicht vorgesehen.

Kunststoffwasserkästen ähnlicher Art sind beispielsweise auch für die Kühler der Verbrennungskraftmaschinen von Nutzfahrzeugen bekannt. Die durch den Rippenrohrblock der Kühler solcher Motoren strömende Kühlmittelmenge ist, da auch die zu kühlende Leistung der Motoren erheblich ist, groß. Dies bedingt auch relativ große Wasserkästen für die Kühler. Die im Hinblick auf das Gewicht vorgenommene Herstellung der Wasserkästen aus Kunststoff macht bei solchen großen Motoren die Anordnung von Aussteifungsteilen in allen den Bereichen des Wasserkastens erforderlich, die größeren Kräften ausgesetzt sind. Dies gilt neben den Eckbereichen, wo die Seitenteile befestigt werden, auch für den Kühlmittelanschlußstutzen, an dem Schlauchanschlüsse abgedichtet angebracht werden müssen. Es ist aus diesem Grund bekannt, in die Anschlußstutzen metallische Stützhülsen einzupressen. Dies macht aber einen zusätzlichen Arbeitsvorgang erforderlich und ist daher relativ aufwendig.

Der Erfindung liegt die Aufgabe zugrunde, einen Kunststoffwasserkasten der eingangs genannten Art so auszubilden, daß das nachträgliche Einpressen von Metallhülsen überflüssig wird, daß trotzdem aber die Anschlußstutzen die erforderliche Steifheit aufweisen.

Zur Lösung dieser Aufgabe wird bei einem Kunststoffwasserkasten der eingangs genannten Art vorgesehen, daß die Stege als Strömungsleitwände ausgebildet sind, die auf ein hohles Rohrstück stoßen und mit diesem verbunden sind. Diese Ausgestaltung macht es in einfacher Weise möglich, den Anschlußstutzen schon von der Herstellung her entsprechend steif auszubilden. Es wird möglich, den freien Querschnitt auch bei dieser Ausführungsform so auszulegen, daß die erforderliche Kühlmittelmenge zu- oder abfließen kann. Das nachträgliche Anbringen von Zusatzteilen zur Aussteifung des Anschlußstutzens ist überflüssig. Diese Ausgestaltung ergibt auch eine Art doppelwandige Ausbildung, die besonders steif ist. Sie weist den Vorteil auf, daß sie einfach herstellbar ist und daß zur Dichteprüfung des fertigen Kühlers ein Abdichtstopfen einschiebbar und befestigbar ist, der in etwa den gleichen Aufbau hat wie der vorher bei der Herstellung verwendete Kern des Spritzwerkzeuges. Es ist daher auch sehr vorteilhaft nach den Ansprüchen 2 und 3, für kreisrunde Anschlußstutzen das Mittelstück als ein kreiszylinderförmiges Rohrstück auszubilden und konzentrisch im freien Querschnitt anzordnen, wobei die im Anschlußstutzen nach außen weisenden Kanten der Stege nach Anspruch 4 von der Vorderkante des Anschlußstutzens etwas zurückversetzt sind, so daß eine kreiszylinderförmige Dichtfläche gebildet ist, die zur Anlage des Abdichtstopfens für die Dichteprüfung ausgenützt werden kann.

Nach Anspruch 5 kann es auch vorteilhaft sein, insbesondere im Hinblick auf eine notwendige Umlenkung der Strömung durch den Anschlußstutzen, das Mittelstück exzentrisch im Anschlußstutzen anzuordnen.

Es gibt verschiedene Möglichkeiten, die einstückig angespritzten Stege auszubilden. Diese Möglichkeiten sind in den weiteren Unteransprüchen aufgeführt.

Eine sehr einfache Möglichkeit ist es, die Stege nach Anspruch 7 gleichmäßig auf dem Innenumfang verteilt anzuordnen und in der Form von Verstärkungsrippen auszubilden, die in der Strömungsrichtung verlaufen.

In allen Fällen ist aus Herstellunggründen darauf zu achten, daß der freie Querschnitt zwischen den Stegen oder dem Mittelstück parallel zueinander verlaufende oder besser leicht konisch nach außen sich erweiternde Wandungen aufweist, damit die Kerne für die Form zur Herstellung des Wasserkastens leicht entfernbar sind.

Die Erfindung ist in der Zeichnung anhand mehrerer Ausführungsformen dargestellt und wird im folgenden erläutert. Es zeigen:
- Fig. 1: eine schematische Teilfrontansicht des Bereiches des Anschlußstutzens für den Kühlmittelzulauf eines Kunststoffwasserkastens für den Kühler eines Kraftfahrzeugverbrennungsmotors,
- Fig. 2: die Draufsicht auf den Wasserkasten der Fig. 1,
- Fig. 3: den Schnitt durch den Wasserkasten der Fig. 1 längs der Schnittlinie III-III,
- Fig. 4: einen Schnitt ähnlich Fig. 3 bei einer ersten Variante des Anschlußstutzens und
- Fig. 5, 6 und 7: Frontansichten von Anschlußstutzen ähnlich Fig. 3, jeweils in der Richtung X gesehen, jedoch bei anderer Ausgestaltung der Innenversteifung,

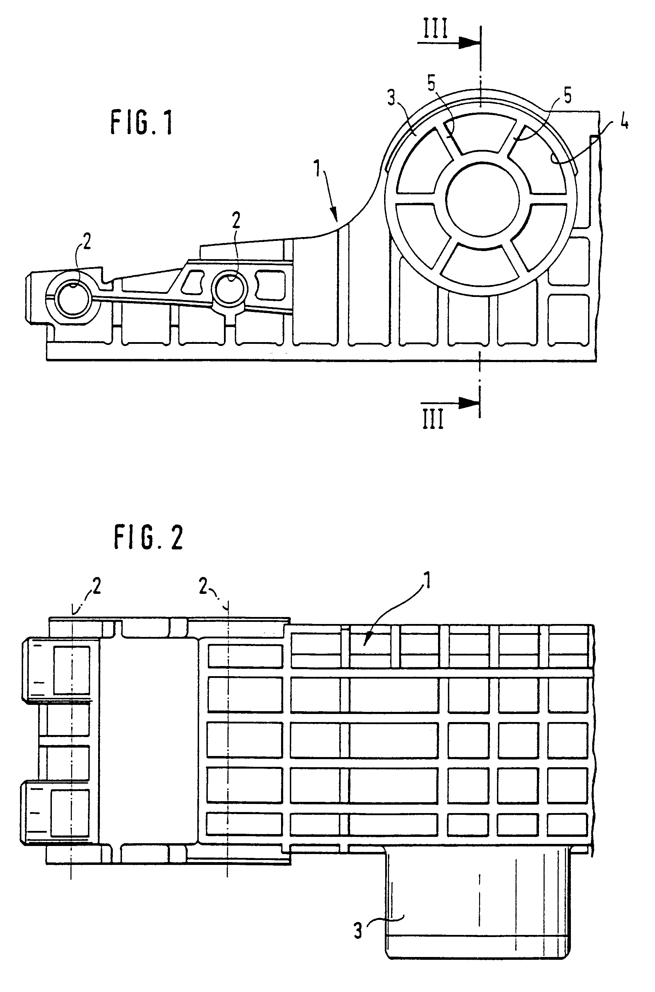

In den Fig. 1 bis 3 ist ein aus Kunststoff hergestellter Wasserkasten für den nicht näher gezeigten Kühler eines Verbrennungsmotores für ein Nutzfahrzeug gezeigt, an dem in bekannter und daher nicht gezeigter Weise ein Rippenrohrblock angebracht wird, der von dem gezeigten Wasserkasten (1) und einem auf der Gegenseite angeordneten ähnlich aufgebauten zweiten Wasserkasten und mit Hilfe von Seitenteilen rahmenartig zusammengehalten wird. Die Seitenteile übergreifen den Wasserkasten (1) mit Laschen jeweils stirnseitig und sind durch Bolzen mit den Wasserkästen (1) und dem zweiten Wasserkasten verbunden, die durch die Bohrungen (2) des Wasserkastens (1) hindurchgesteckt sind. Auf der rechten, nicht gezeigten Seite des Wasserkastens befinden sich ähnliche Bohrungen.

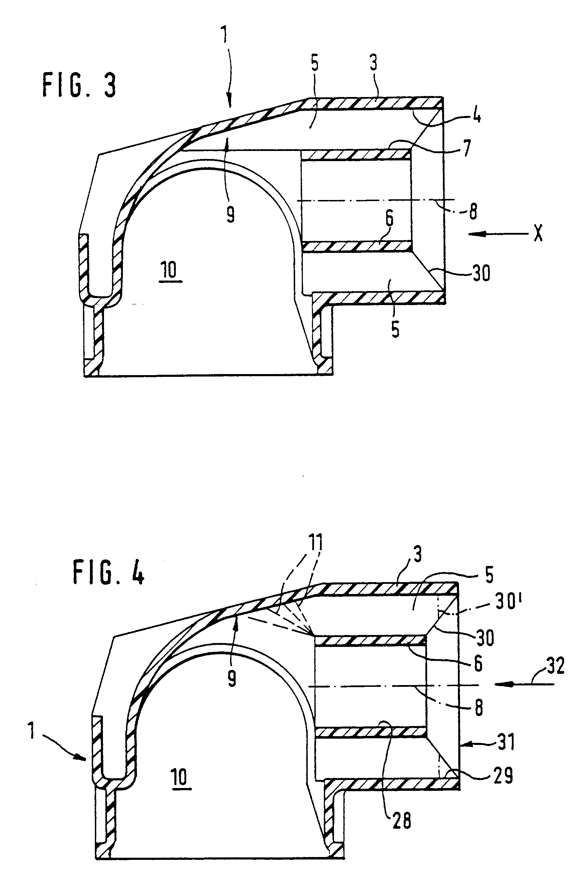

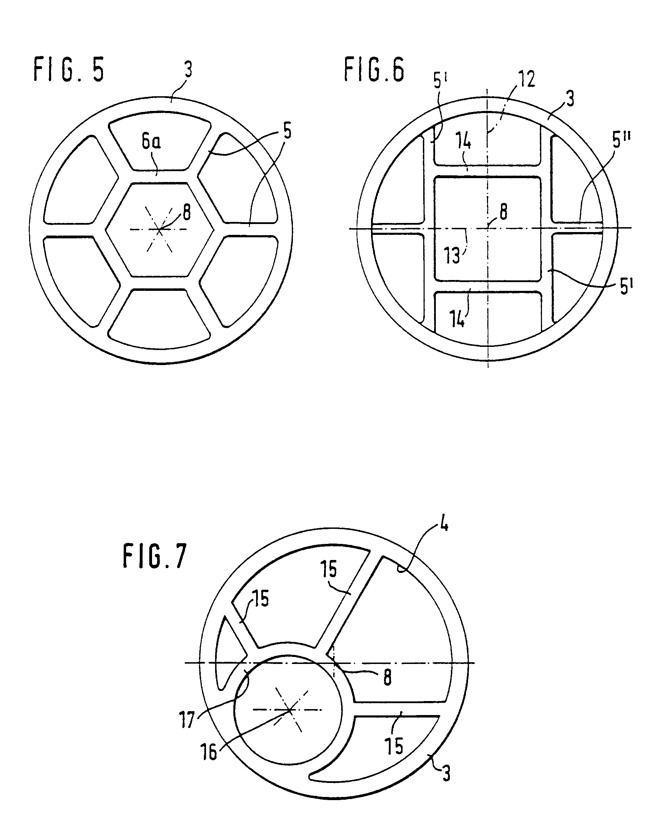

Der Zufluß des Kühlmittels in den Wasserkasten und damit zum Rippenrohrblock erfolgt über den Anschlußstutzen (3), an dem in nicht näher dargestellter Weise beispielsweise ein Schlauchanschluß über eine Rohrschelle dicht befestigt wird. Um diesen Anschlußstutzen (3), der aus Kunststoff gespritzt werden muß, dessen Wandstärke aber eine bestimmte Dicke aus Herstellungsgründen nicht überschreiten kann, die notwendige Steifigkeit zu geben, ist vorgesehen, von der Innenwand (4) nach innen in den freien Querschnitt hereinragende Stege (5) anzuordnen, die bei der gezeigten Ausführungsform eines kreisrunden Anschlußstutzens (3) auf ein mittig angeordnetes Rohrstück (6) mit kreisrundem Querschnitt stoßen. Die Stege (5) und das Rohr (6) sind einstückig mit an den Anschlußstutzen (3) bei der Herstellung des Wasserkastens angespritzt. Fig. 3 zeigt, daß die Innenwand (4) des Anschlußstutzens (3) mit der Außenwand (7) des Rohrstückes (6) etwa parallel verläuft. Ebenso verlaufen die Stege (5) in Ebenen, die durch die Mittelachse (8) des Anschlußstutzens (3) verlaufen. Der Anschlußstutzen (3) läßt sich daher durch Verwendung eines entsprechenden Kernes herstellen. Die in der Fig. 3 und 1 oben liegenden beiden Stege sind dabei bis in den Bereich (9) des Anschlußstutzens hereingeführt, der schon über dem Innenraum (10) des Wasserkastens liegt. Fig. 4 zeigt, daß dies nicht unbedingt notwendig ist, sondern daß das Ende der Stege (5) schon vor dem Umlenkbereich (9), wie mit den gestrichelten Linien (11) angedeutet, enden kann. Strichpunktiert ist die Vorderkante (30') der Stege (5) angedeutet, die in der Strömungsrichtung (32) des Kühlmittels gegenüber der Vorderkante (31) des Anschlußstutzens (3) etwas zurückversetzt sind, so daß eine Kreiszylinderfläche (29) entsteht. Es ist auch möglich, die Vorderkante (30') so weit zurückzuversetzen, daß sie mit der Vorderkante des Rohrstückes (6) fluchtet.

Aus den Fig. 1 und 3 wird deutlich, daß der auf diese Weise hergestellte Anschlußstutzen (3) wegen seiner doppelwandigen Ausbildung sehr stabil ist. Das nachträgliche Einsetzen einer Metallhülse wird überflüssig. Der freie Querschnitt des Anschlußstutzens kann so gewählt werden, daß er groß genug ist, um die erforderliche Kühlmittelmenge ohne Druckverluste durchströmen zu lassen. Die gezeigte Aussteifung durch die Rippen und das Rohrstück (6) kann auch mit dazu beitragen, das zuströmende Kühlmittel möglichst wirbelfrei in in den Wasserkasten herein- oder wieder aus dem herauszuführen.

Die Fig. 5 und 6 zeigen Querschnittsformen der Aussteifung des Anschlußstutzens (3), die im Längsschnitt etwa den in den Fig. 3 und 4 gezeigten Schnittformen entsprechen können. Fig. 5 zeigt im Unterschied zu der Darstellung nach Fig. 1 aber kein kreiszylinderförmiges Rohrstück, sondern ein Rohrstück (6a), das als ein in der Form eines gleichmäßigen Sechseckes ausgebildetes Polygon ausgebildet ist. Fig. 6 dagegen zeigt eine Ausführungsform, bei der die Stege (5', 5'') nicht radial wie die Stege (5) der Fig. 1 bis 5 verlaufen, sondern bei der nur die Stege (5'') radial zum Zentrum der Achse (8) hin verlaufen, die Stege (5') aber jeweils im Abstand zu einer Ebene (12) verlaufen, die senkrecht auf einer durch die Mittelachse (8) verlaufenden Ebene (13) steht, in der die beiden Stege (5') liegen. Die somit außermittig liegenden beiden Stege (5') bilden mit Querstegen (14) ein im Querschnitt quadratisches Mittelstück, das quaderartig ausgebildet ist und dessen Mittelachse die Achse (8) ist.

Fig. 7 zeigt eine Abwandlung aller bisher gezeigten Querschnittsformen für einen Anschlußstutzen insofern, als hier eine zur Mittelachse (8) des kreiszylinderförmigen Anschlußstutzens (3) asymmetrisch angeordnete Steg- und Hohlkörperanordnung zur Aussteifung vorgesehen ist. Hier verlaufen die Stege (15) zentral von einer parallel zur Mittelachse (8) verlaufenden Achse (16) aus, die aber exzentrisch im Kreisquerschnitt des Anschlußstutzens (3) liegt. Eine kreiszylinderförmige Wandung bildet ein Rohrstück (17), das konzentrisch die Achse (16) umgibt und von dieser aus erstrecken sich in der vorher geschilderten Weise die Stege (15) nach außen bis zur Innenwandung (4) des Anschlußstutzens. Solche Aussteifungen bieten sich beispielsweise an, um die Kühlmittelströmung im Anschlußstutzen mengenmäßig aufzuteilen, um beispielsweise, bei entsprechender Anordnung der exzentrischen Achse (16), den größeren Teil der Kühlmittel-Strömung am Bereich (9) der Umlenkwandung umzulenken, den durch das Rohrstück (17) durchgeführten Teil jedoch erst später der umgelenkten Strömung zuzumischen.

Alle Ausführungsformen lassen sich einstückig aus Kunststoff formen. Es ist natürlich darauf zu achten, daß die Wände der Stege untereinander und zu der Innenwand (4) des Anschlußstutzens (3) parallel oder besser noch leicht konisch sich nach außen erweiternd angeordnet sind, damit der für die Herstellung des Kunststoffwasserkastens verwendete Kern des Werkzeuges leicht in Richtung der Achse (8) herausgezogen werden kann.

Erwähnt werden soll noch, daß beispielsweise die Bauart nach Fig. 4 in besonders einfacher Weise dazu ausgenützt werden kann, um zur Dichteprüfung des fertigen Wärmetauschers einen Dichtstopfen einzusetzen. Ein solcher Dichtstopfen nämlich kann mit einem zentralen Teil in das Rohrstück (6) eingeschoben und dort durch radiales Aufspreizen an der Innenwandung (28) des Rohrstückes (6) dicht gehalten werden, wobei gleichzeitig ein Teil des Dichtstopfens mit größerem Durchmesser an der im Bereich der Eintrittskante (31) des Anschlußstopfens (3) an frei bleibenden Ringfläche (29) dicht angesetzt werden kann. Bei allen Bauarten ist trotz hoher Stabilität des Anschlußstutzens ein nachträgliches Einsetzen von zusätzlichen Teilen, beispielsweise in der Form einer Aussteifungshülse, unnötig. Vorteilhaft ist auch dabei, daß ein Dichtstopfen dann unmittelbar dicht an der Innenwand des Anschlußstutzens und nicht an einer eingesetzten Hülse anliegt, die ihrerseits wiederum gegenüber dem Anschlußstutzen undicht sein kann.

Die für den Kühler des Kühlmittelkreislaufes eines Nutzfahrzeugmotores beschriebenen Ausführungsbeispiele lassen sich auch für die Anschlußstutzen der Luftkästen von Luft/Luft-Kühlern verwenden, zum Beispiel für Ladeluftkühler von Dieselmotoren.

## Patentansprüche

1. Kunststoffwasserkasten (1) für Wärmetauscher von Verbrennungskraftmaschinen, insbesondere für Kühler von Nutzfahrzeugmotoren, der mit mindestens einem Anschlußstutzen (3) für ein Wärmetauschmedium versehen ist, der auf seiner Innenwand (4) mit einer Aussteifung versehen ist, die aus von der Innenwand (4) ausgehenden und nach innen ragenden Stegen (5, 15, 5') besteht, dadurch gekennzeichnet, daß die Stege (5, 5', 15) als Strömungsleitwände ausgebildet sind, die auf ein hohles Rohrstück (6, 17) stoßen und mit diesem verbunden sind.

2. Kunststoffwasserkasten nach Anspruch 1, dadurch gekennzeichnet, daß das Rohrstück (6) kreiszylinderförmig ausgebildet ist.

3. Kunststoffwasserkasten nach Anspruch 2 mit einem kreisrunden Anschlußstutzen, dadurch gekennzeichnet, daß das Rohrstück (6) konzentrisch zur Mittelachse (8) des Anschlußstutzens (3) angeordnet ist.

4. Kunststoffwasserkasten nach einem der Ansprüche 1 bis 3, dadurch gekennzeichnet, daß die Vorderkanten (30) der Stege (5) wenigstens im Bereich der Innenwand (4) des Anschlußstutzens (3) von der Eintrittsöffnung (31) des Anschlußstutzens (3) etwas nach innen zurückversetzt sind, so daß eine umlaufende Ringfläche (29) entsteht.

5. Kunststoffwasserkasten nach einem der Ansprüche 2 und 4, dadurch gekennzeichnet, daß das Rohrstück (17) exzentrisch im Querschnitt des Anschlußstutzens (3) angeordnet ist.

6. Kunststoffwasserkasten nach Anspruch 1, dadurch gekennzeichnet, daß die Stege (5, 15, 5') einstückig angespritzt sind.

7. Kunststoffwasserkasten nach den Ansprüchen 1 und 6, dadurch gekennzeichnet, daß die Stege (27) als gleichmäßig auf dem Innenumfang verteilt angeordnete Verstärkungsrippen ausgebildet sind, die in Strömungsrichtung verlaufen.

8. Kunststoffwasserkasten nach Anspruch 1, dadurch gekennzeichnet, daß die Stege (5, 18, 27) radial zur Mittelachse (8) des Anschlußstutzens (3) hin verlaufen.

9. Kunststoffwasserkasten nach Anspruch 5, dadurch gekennzeichnet, daß die Stege (15) radial zu einer Mittelachse (16) des exzentrischen Rohrstückes (17) verlaufen.

## Claims

1. A plastic water tank (1) for a heat exchanger in an internal combustion engine, in particular for a radiator in a service vehicle, fitted with at leat one adaptor (3) for a heat exchange medium, the internal wall (4) of which is reinforced by means of fins (5, 15, 5') protruding outward and inward from the internal wall (4), characterised in that the fins (5, 15, 5') are designed as flow guide walls which abut against a hollow piece of pipe (6, 17) to which they are connected.

2. A plastic water tank in accordance with claim 1, characterised in that the piece of pipe (6) is designed in the form of a circular cylinder.

3. A plastic water tank in accordance with claim 2 with a circular adaptor, characterised in that the piece of pipe (6) is positioned concentrically in relation to the centre axis (8) of the adaptor (3).

4. A plastic water tank in accordance with one of claims 1 to 3, characterised in that at least in the area of the internal wall (4) of the adaptor (3) the front edges (30) of the fins (5) are set slightly back from the inlet opening (31) of the adaptor (3) thus creating a ring surface (29) around it.

5. A plastic water tank in accordance with one of claims 2 and 4, characterised in that the piece of pipe (17) is positioned eccentrically in the cross section of the adaptor (3).

6. A plastic water tank in accordance with claim 1, characterised in that the fins (5, 15, 5') are injection moulded in one piece.

7. A plastic water tank in accordance with claims 1 and 6, characterised in that the fins (27) are designed as reinforcing ribs distributed equally around the internal circumference which run in the direction of flow.

8. A plastic water tank in accordance with claim 1, characterised in that the fins (5, 15, 5') run radially in relation to the centre axis (8) of the adaptor (3).

9. A plastic water tank in accordance with claim 5, characterised in that the fins (15) run radially in relation to a centre axis (16) of the eccentric piece of pipe (17).

## Revendications

1. Boite de distribution en matière plastique (1) pour échangeurs de chaleur de moteurs à combustion interne, en particulier pour radiateurs de moteur de véhicule utilitaire pourvue d'au moins une tubulure de raccordement (3) destinée à un milieu d'échange de chaleur, pourvue sur sa paroi intérieure (4) d'un élément de rigidification, composé de nervures (5, 15, 5') partant de la paroi intérieure (4) et se projetant vers l'intérieur, caractérisée en ce que les nervures (5, 5', 15) sont réalisées sous forme de parois de guidage d'écoulement, rejoignant une pièce tubulaire (6, 17) creuse et reliées à celle-ci.

2. Boite de distribution en matière plastique selon la revendication 1, caractérisée en ce que la pièce tubulaire (6) a une forme cylindrique circulaire.

3. Boite de distribution en plastique selon la revendication 2, avec une tubulure de raccordement circulaire, caractérisée en ce que la pièce tubulaire (6) est disposée concentriquement par rapport à l'axe médian (8) de la tubulure de raccordement (3).

4. Boite de distribution en plastique selon l'une des revendications 1 à 3, caractérisée en ce que les arêtes avant (30) des nervures (5) sont quelques peu décalées vers l'intérieur par rapport à l'ouverture d'entrée (31) de la tubulure de raccordement (3), au moins dans la zone de la paroi intérieure (4) de la tubulure de raccordement (3), de sorte qu'est constituée une face annulaire (29) faisant le pourtour.

5. Boite de distribution en plastique selon l'une des revendications 2 et 4, caractérisée en ce que la pièce tubulaire (17) est disposée excentrée dans la section transversale de la tubulure de raccordement (3).

6. Boite de distribution en plastique selon la revendication 1, caractérisée en ce que les nervures (5, 15, 5') sont réalisées d'une seule pièce, venue d'injection.

7. Boite de distribution en plastique selon les revendications 1 et 6, caractérisée en ce que les nervures (27) sont réalisées sous forme de nervures de renforcement, réparties régulièrement sur la périphérie intérieure et s'étendant dans la direction de l'écoulement.

8. Boite de distribution en plastique selon la revendication 1, caractérisée en ce que les nervures (5, 18, 27) s'étendent radialement par rapport à l'axe médian (8) de la tubulure de raccordement (3).

9. Boite de distribution selon la revendication 5, caractérisée en ce que les nervures (15) s'étendent radialement par rapport à un axe médian (16) de la pièce tubulaire excentrique (17).
